# EUROPEAN PATENT SPECIFICATION

(11) **EP 3 446 467 B1**
(45) Date of publication and mention of the grant of the patent: **17.02.2021**
(21) Application number: 17724293.0
(22) Date of filing: 19.04.2017
(51) Int. Cl.: H04W 4/50, H04W 4/60, H04W 4/70, H04L 29/08

(54) **METHOD AND CONTROL DEVICE FOR MANAGING REMOTE SENSOR OR ACTUATORS**
VERFAHREN UND STEUERUNGSVORRICHTUNG ZUR VERWALTUNG VON ENTFERNTEN SENSOREN ODER AKTUATOREN
PROCÉDÉ ET DISPOSITIF DE COMMANDE POUR GÉRER UN CAPTEUR OU DES ACTIONNEURS DISTANTS

(30) Priority: 20.04.2016 IT UA20162758
(43) Date of publication of application: 27.02.2019
(73) Proprietor: Universita' degli studi di Brescia, 25121 Brescia (IT)
(72) Inventor: VEZZOLI, Angelo, 25121 Brescia (IT); FLAMMINI, Alessandra, 25121 Brescia (IT); DEPARI, Alessandro, 25121 Brescia (IT); RINALDI, Stefano, 25121 Brescia (IT); BELLAGENTE, Paolo, 25121 Brescia (IT)
(74) Representative: Chimini, Francesco
(86) International application number: PCT/IB2017/052239
(87) International publication number: WO 2017/182960

(56) References cited:
- EP-A1- 2 683 146
- EP-A1- 2 758 843
- WO-A1-2014/064621
- US-B1- 9 092 296

## Description

The present invention relates to a method and a control device for managing remote sensors and/or actuators.

The new, low-cost wired and wireless sensory systems are widespread: from the industrial environment, where they were mostly exploited in the past, to our houses, for ambient assisted living and home automation, and for smart grids. Sensory systems are typically composed of many sensors, which need to interact and exchange data, also exploiting data-fusion. Key points of wireless sensory systems are: reliability, self-management, power consumption and communication systems, with a special attention to web capability, according to Internet of Things (IoT) architectures.

Nowadays, smartphones and tablets are the low-cost, widely used devices with good wired or wireless communication capabilities. Normally used as a mobile sensor data collector, the smartphone is often the most efficient gateway between the sensor network and the web. For this reason, sensor wireless connectivity prefers technologies supported by smartphones, such as NFC, Bluetooth®, GSM and Wi-Fi. Besides its gateway function, new smartphones embed high quality sensors. Smartphone and tablets also support wired communication as Ethernet or USB, with a special attention to USB On-The-Go. Smartphone producers are investigating to include new type of sensors, e.g. for health monitoring, besides the widespread accelerometers, cameras, microphones or GPS. Many sensors are used at the body level for fitness purposes and health monitoring, and often the smartphone is proposed as a sort of body gateway, merging internal and external sensors.

All the applications previously referred to are based on the same architecture: external sensors are realized with a specific designed firmware in order to communicate the measurement information; a specific application ("APP"), that recovers sensory information from the communication channel, is developed at the smartphone level, normally equipped with the operative system Android. Android allows a very easy use of internal sensors; on the contrary, external sensors are quite complicate to treat, especially if different sensors from different manufacturers with different communication profiles are used in the same application.

In order to make easier the work of Android programmers, some manufacturers recently propose hardware development kits, with input/output to be connected to sensors and actuators, together with a purposely developed APP to manage input/output in a transparent way. This APP-based architecture is quite rigid and, if a multi-sensors, multi-producer environment is needed, a multi-APP solution should be developed, decreasing smartphone performances (CPU, memory, power consumption). EP 2758 843 A1 discloses a thermostat management system which facilitates an automatic pairing of a thermostat with a thermostat communication account.

The present invention is defined by the subject-matter of the independent claims. Advantageous embodiments are defined in the dependent claims. Embodiments which do not fall in the scope of the appended set of claims are to be interpreted as background information useful for understanding the invention. This invention proposes a method to virtually embed several external sensors within the smartphone, according to a library-based architecture. This method allows to easy develop sensor-fusion applications, managing internal sensors and external sensors, even from different manufacturers, in the same way. The proposed architecture reduces the distance between remote sensors and the smartphone, providing the tools to make transparent the link between them (from the developer/user point of view).

Therefore, one object of the present invention is to propose a method and a control device which allow handling the resources of remote devices (sensors or actuators), as they would be into the control device, for example a smartphone or a tablet.

This and other objects of the invention are achieved with a method for managing remote sensors and/or actuators by means of a user application running on a control device provided with an operative system and with a communication interface supporting a wired or wireless communication system. The method comprises the steps of:
- providing a firmware library containing precompiled firmware for all the sensors and/or actuators to be controlled;
- downloading in the microcontroller's memory of each sensor or actuator its suitable firmware;
- connecting each sensor or actuator to the control device through the wired or wireless communication system;
- associating to each firmware a descriptor file suitable for allowing the control device to uniquely identify and address the resources of each sensor or actuator;
- providing, in the control device, software-based objects corresponding to the remote sensors and/or actuators to be controlled, or to a combination thereof, each software-based object emulating the behavior of an embedded sensor or actuator designed according to the control device's operative system and being suitable to be instanced and handled by the user application;
- providing, in the control device, software-based devices corresponding to the remote sensors and/or actuators to be controlled, each software-based device being suitable for handling the communication and data acquisition/transmission with the corresponding remote sensor or actuator according to the respective firmware and descriptor file, and for transmitting to a software-based object the data received from at least one corresponding remote sensor or for receiving from the software object the data to be transmitted to at least one corresponding remote actuator.

In one embodiment, the method further comprises a step of pre-elaborating the data retrieved from the remote sensors so as to adapt said data to the operative system data format used by the software-based objects, and vice versa.

In one embodiment, the firmware library is stored in the memory of the control device or is available online.

In one embodiment, the remote sensors and/or actuators are identified by identifiers (IDs), which for example provide information related to services, characteristics and descriptors.

Preferably, the identifier is configured to indicate a descriptor that provides information on a resource made available by the remote node.

In one embodiment, the identifier is a UUID (Universally Unique Identifier).

The present invention also is directed to a control device for managing remote sensors and/or actuators, wherein each of the remote sensors and/or actuators communicates with the control device through a wired (e.g. USB or Ethernet) or wireless communication channel, and wherein the control device is provided with an operative system and includes a user application suitable for managing the remote sensors and/or actuators. The control device comprises software means for downloading in the microcontroller's memory of each sensor or actuator a suitable firmware taken from a firmware library containing the firmware for operating each remote sensor or actuator, software means for associating to each firmware a descriptor file suitable for allowing the control device to uniquely identify and address the resources of each sensor or actuator, and software-based objects corresponding to each remote sensor or actuator to be controlled, or to a combination thereof.

Each software-based object emulates the behavior of an embedded sensor or actuator designed according to the control device's operative system and is suitable to be instanced and handled by the user application.

Furthermore, the control device comprises software-based devices corresponding to the remote sensors and/or actuators to be controlled. Each software-based device is suitable for handling the communication and data acquisition/transmission with the corresponding remote sensor or actuator according to the respective firmware and file descriptor, and for transmitting to a software-based object the data received from at least one corresponding remote sensor or for receiving from the software object the data to be transmitted to at least one corresponding remote actuator.

In one embodiment, the software-based devices are interfaced with the software-based objects through data pre-elaboration software means, which are suitable for adapting the data retrieved from the remote sensors to the operative system data format used by the software-based objects, and vice versa.In one embodiment, the remote node has an ID (or an identification name) that identifies which firmware (FW) and/or hardware (HW) has on board. This allows the application of the framework to associate the appropriate descriptor. Thus, the user or the application who is associating the nodes assigns a name to the remote node, which in turn is associated with each resource on the remote node (which are sensors and / or actuators), therefore uniquely identifying the resource. In this way, even in case of multiple identical remote nodes, each resource belonging to a specific node is identified.

Further details and advantages of the method and control device according to this invention will, in any case, be evident from the following description of a preferred embodiment, provided by way of non-limiting example, with reference to the accompanying drawings, in which:
- figure 1 is a flow chart representing the sequence of phases of a first part of the method according to the invention;
- figure 2 is a diagram of the logical structure of the software means of the control device according to the invention;
- figures 3 and 3a are flow charts showing an instance to a virtual sensor or actuator and of the corresponding data request, respectively;
- figure 4 schematically represents a network of sensors and actuators controlled by a smartphone, for a home automation application;
- figure 5 shows the network of figure 4, in an operation mode in which the alarms are turned on;
- figure 6 shows the network of figure 4, in an operation mode in which the alarms are turned off;
- figure 7 is a piece of code of a callback called when a button embedded in a smart device is clicked; and
- figure 8 is a piece of code of a callback called when a button of a remote device is clicked.

In the following description, the terms "remote node", "sensor" and "actuator" are interchangeable, if not otherwise specified.

Furthermore, the remote node can be a remote device which embeds sensors and/or actuators to be controlled.

The following description refers to a smartphone as an example of control device. However, it should be noted that any other device, not necessarily a mobile device, which is provided with an operative system and supports a wired or wireless communication system, could be used for implementing the control method according to the invention.

With respect of the state of the art, where remote nodes are programmed with an application specific firmware (FW) and the APP recovers information from the nodes exploiting the communication channel and therefore in a more difficult way if compared with embedded resource, the present invention proposes a framework where suitable libraries allow the APP to treat external and internal resources in the same way. Also, in the state of the art the developer must have a deep knowledge of HW and SW of the remote node, the present invention proposes instead a framework where the above-mentioned knowledge is no more necessary because the framework itself recovers the needed data and provides them in the appropriate format.

The final user shall be able to install Apps targeted for remote devices included in the framework and to use all the resources, local and remote; in other words, to develop software for his own application in an operative system, for example Android, environment easily handling remote resources, even with different FWs and even from different manufacturers.

The proposed method is oriented to include, as remote devices, remote nodes that can be easily reprogrammed, for instance by means of a USB interface (e.g. USB On-The-Go interface) or J-TAG interface by the means of a wired or wireless communication supported by the control device.

Bluetooth 4.0-4.1 is the communication technology used for the following description of some embodiments of the invention, because it seems the most promising for wireless sensor battery powered applications. However, the proposed solution is extendable to other wired or wireless technologies supported by smartphones, tablets and sensors, such as NFC, Bluetooth, GSM, Wi-Fi, or USB.

In one embodiment, the operative system is Android, as will be explained in a following section.

In one embodiment, the architecture implementing the control method according to the present invention comprises two main parts. A first part is a "transparency layer", that is, a framework including a library-set, which makes able the operative system developers to handle the remote sensor device resources, like they would be embedded in the smartphone (or tablet) itself.

A second part is a tool able to identify the remote sensors and, optionally, to program the suitable firmware (FW) on the microcontroller of the remote sensor itself.

Preferably, the tool is an application, for example installed on a smart device itself (smartphone, tablet and similar), but it can also be part of an application of a developer (in this latter case a library is provided to perform the needed functions).

It should be highlighted that it is not necessary to have a specific FW for each application, as it is needed in the state of the art; for instance, a development kit with its own FW can be left as it is, but the FW and the library are linked and the programming action is needed to have a "known" FW. Particularly, the FW on the microcontroller is responsible for matching the BT 4.0-4.1 requirements (e.g., UUIDs, timing, etc.) for the application and to address the resources of the sensor device, in order to allow the recovering of their data by the smart device.

The following description is structured as follows: in Section I, Android environment resources are briefly described; Section II introduces the Bluetooth 4.0-4.1 technology. A preferred embodiment of the present invention is presented in Section III. Section IV presents an application of the proposed method for home automation systems. Finally, some conclusions are reported in Section V.

### I. ANDROID ENVIRONMENT

### A. Embedded sensors

As mentioned above, the great innovation of the smart devices (e.g. smartphones, tablets) is the integration of sensors over a performing computational platform, still keeping low the cost and easy the use. Android supports position, motion and environmental sensors, besides cameras, microphones, GPS. There are different types of sensing technologies in modern smart devices. They can be divided in two main categories: hardware (HW) based and software (SW) based. HW based, as accelerometers, gyroscopes, magnetic field sensors, proximity sensors, thermometers, barometers, humidity or light sensors, GPS, cameras, microphones, imply physical devices embedded within the Smartphone. SW based, as gravity, rotation or orientation, provide data aggregating and elaboration of raw data from one or more HW based sensors. Data from HW or SW based sensors are easily available, typically by means of a sensors event which triggers a callback indicating if data is changed.

On the contrary, external wired or wireless sensory systems can be accessed by a direct communication system (e.g. NFC, Bluetooth, Wi-Fi, USB), if they are local, or by the web (e.g. meteo information); this is the case of "internet-enabled" sensors, where the data is derived aggregating HW based sensors (e.g. position) with data recovered by the web (e.g. weather).

According to the present invention, external sensors are treated in the same way as SW based sensors.

### B. Communication technologies

Although the proposed method can be applied to every wired or wireless communication system supported by the smartphone, the following description focuses on wireless sensory systems and, particularly, on Bluetooth.

Actually, NFC has a short communication range and is not suitable for multi-sensors applications, while GSM/UMTS is not widespread for wireless sensor networks because it is costly. IEEE 802.11, also known as Wi-Fi, is the preferred solution for sensory systems directly managed in cloud, but the high power consumption limits its use. Wi-Fi Direct (known also as Wi-Fi P2P) is a Wi-Fi standard, which enables devices to connect without the presence of a wireless access point, making Wi-Fi more flexible and suitable for sensors applications, but the consumption remains quite high. Bluetooth is the wireless communication supported by smart devices that better fits with wireless sensor networks, thanks to low cost, a good range and a quite low power consumption. Bluetooth technologies have been deeply exploited because the use of a profile or another strongly affects performance. The specification 4.0 and 4.1, are described in the next section.

### II. BLUETOOTH 4.0 - 4.1

The new Personal Area Network (PAN) technology, Bluetooth Smart (BS), has been introduced starting from Bluetooth specification 4.0 (4.1 is a software enhancement of the 4.0 release). BS is also known as Bluetooth Low Energy (BLE), thanks to a power reduction. It is implemented mainly for health care, fitness, security and home entertainment applications.

In one embodiment, the proposed solution takes advantage from GATT profile (Generic ATTribute profile), implemented in BS, which defines networks composed by two kinds of devices: the server, which furnishes data on demand, e.g. a generic sensor; and the client, which requires data from the servers, e.g. device smartphone. In order to retrieve data from the server devices, GATT defines the "services", homogeneous group of "characteristics", which contribute to perform a specific function. The characteristics are specified by GATT profile as data available on the server device, and are paired with "descriptors", which provide information about the related characteristics. Services, characteristics and descriptors are identified by UUIDs (Universally Unique Identifier). GATT UUIDs could be random or pseudorandom for proprietary purposes; Bluetooth SIG standardized some UUIDs for specific applications.

### III. ONE PREFERRED EMBODIMENT OF THE INVENTION

As mentioned above, the aim of the proposed method and control device is to allow handling the resources of remote devices (sensors or actuators), as they would be into the control device. With respect of the state of the art, where remote nodes are programmed with an application specific FW and the APP recovers information from the nodes exploiting the communication channel and therefore in a more difficult way if compared with embedded resource, a method is proposed where suitable libraries allow the APP to treat external and internal resources in the same way. The final user shall be able to install Apps targeted for remote devices included in the framework and to use all the resources, local and remote.

In other words, the user will be able to develop software for his own application in Android environment easily handling remote resources, even with different FWs and even from different manufacturers. The proposed method is oriented to include, as remote devices, BLE nodes that can be easily reprogrammed, for instance by means of a J-TAG interface.

The method according to the invention can be divided in two parts: one, called 'FW stage', described in the following Section A, is mainly oriented to set up the sensor devices and create the 'pointer' to their resources; the other, called 'SW stage', described in the following Section B, is a layer to make transparent the interactions with the pointed resources.

### Section A. FW stage: Firmware flasher and resource addressing.

The FW stage is supported by a developed Application (APP) called 'BLEEmbedded_flasher'. The main aim of the APP is to address the resources of the remote nodes. In addition, the APP is suitable to transparently program the node with its FW, selectable from a FW library.

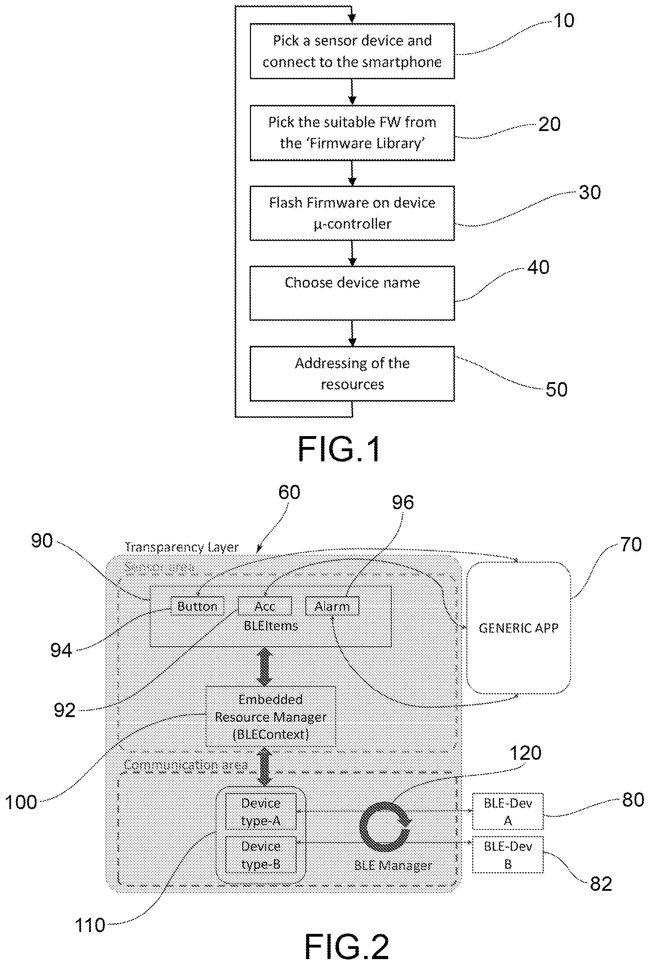

As shown in the flow chart of Figure 1, the first step (10) to set up the sensors system is represented by the choice of the sensor and the connection between the sensor and the smartphone. Then, the method provides for the selection of the suitable FW from the 'Firmware Library', a library of precompiled FW for all the possible devices and applications (step 20). Two examples of FWs are those for the CC2541-DK and for the STEVAL-IDB0002V1.

The precompiled FWs are stored either online or directly on the control device memory and are easily available to the users through the 'BLEEmbedded_flasher'. Obviously, the FW is strictly related to the type of the microcontroller mounted on the sensor device and the type of sensors to control on the board. Normally, the FW provided by the Hardware producer to communicate information over the Bluetooth link is a perfect starting point. These first two steps are performed by the user. Once the suitable FW is chosen, the user might download it on the flash memory of the micro-controller (step 30). The 'BLEEmbedded_flasher' helps the operation, in order to avoid the need of a computer, flashing the device by means of the relative programmer furnished by the development board producer. The Programmer is connected with the control device (Smartphone or tablet) through the USB OTG and, in turn, the programmer is connected to the remote node (development board) through JTAG communication.

The communication between the control device and the programmer and the elaboration of the FW in order to be 'writable' on the device is transparently handled by the 'BLEEmbedded_flasher' application.

For example, the software developed to perform the flashing activity is based on tutorial, software samples and Application Note specific for each manufacture and for groups of micro-controller families: only supported devices could be programmed. For example, flashers functionalities have been developed in the 'BLEEmbedded_flasher' for Texas Instruments and ST microcontrollers.

It should be noted that the flashing stage is not required if the development board has its own FW from manufacturer.

After the flashing stage, the 'BLEEmbedded_flasher' starts the joining phase, that is needed to establish BLE connection and during which resources are identified and addressed. The 'BLEEmbedded_flasher' scans for the BLE remote devices; once one remote device announces itself, the Application requires the user to define a name for the device (step 40), in order to uniquely identify the resources on that specific device and addressing them automatically, for example by means of the device MAC address (step 50).

In this way, the final user could discriminate resources even from identical devices, programmed with identical FW, requiring in its own Application by means of the chosen name exploiting the 'Transparency layer', as shown in next section. At the end of this stage, the 'BLEEmbedded_flasher' generates a 'description file', where all the resources addressed following the procedure shown in Figure 1 (at least the last two steps 40, 50) are reported. The 'description file' shall be used by the 'SW stage' to point to the remote resources.

The 'FW stage' should be performed only the first time, except if the Bluetooth sensor devices changes.

### Section B. SW stage: Transparency layer framework

This section describes the framework implementing the control method, called 'Transparency layer framework' 60, realized in order to make easier to access to the resources addressed by means of the first part of the method described in the previous section. Figure 2 shows the logical structure of the 'SW stage'.

Out of the 'transparency layer framework' 60 there are the GENERIC APP 70, that is, any Application developed by the user, and the BLE-Devs 80, 82, the real BLE remote devices.

In the transparency layer framework 60, the 'BLEItems' 90 are created. These BLEItems 90 are software-based objects which emulate the behavior of an embedded Android 'Item', such as accelerometer 92, buttons 94, alarm 96 and so on. These objects 90 can be instanced and handled by the user Application 70.

In the transparency layer framework 60, an embedded Resource Manager software module 100 is provided. This Resource Manager software module 100 is called 'BLEContext', since it is the counterpart of the Context in Android framework. In fact, it makes available the resources (i.e. the 'BLEItems' 90) to the user Application, acting as they would be embedded. Moreover, this software module 100 filters and pre-elaborates data from and for the 'BLEItems' 90.

In the transparency layer framework 60, 'Device-types' 110 are provided. These Device-types 110 are software-based objects hidden from the user Application, which handles the BLE communication and data acquisition/transmission; each real device 80, 82 has a 'Device-type' counterpart. They allow the transparent interaction between the user Application with any kind of remote devices, understanding the data provided by the relative BLE-Devs. The 'dictionary' of the selected type is already loaded in the framework, and it is indicated from the device itself (communicating its FW version). The 'dictionary' (e.g. data format and UUIDs of the GATT profile) is presumed to be present in the framework, because the Bluetooth device has been programmed with a known FW in the 'FW stage', thus it is a known device. 'BLEManager' 120 wraps the 'BLEManager' already embedded in Android framework, making easier the communication between the 'Device-type' objects 110 and the real BLE-Devices 80, 82.

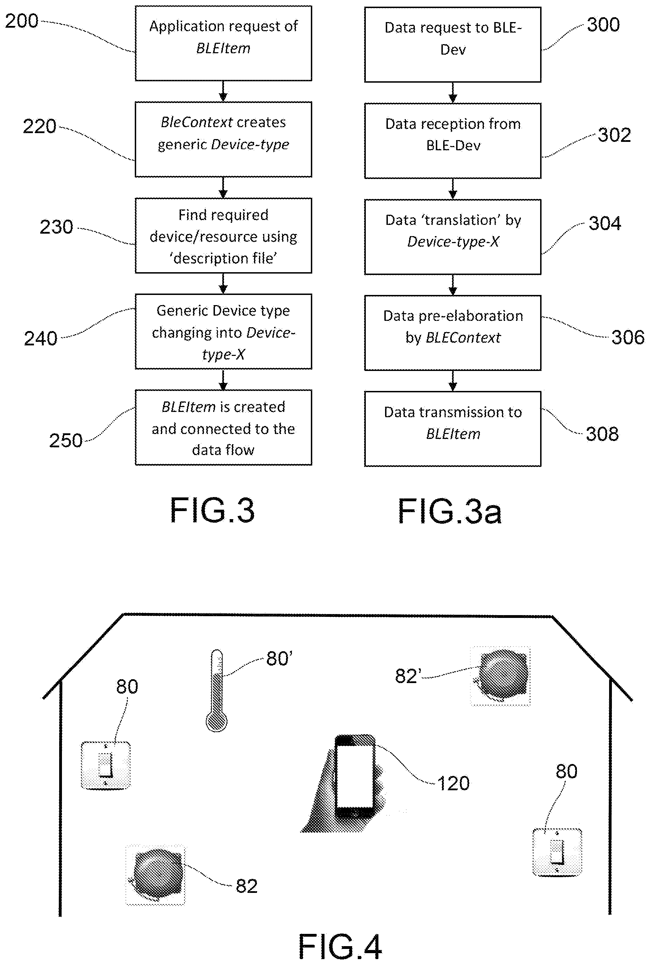

Figures 3 and 3a show the flow charts of the instance procedure for a 'BLEItem' 90 by the user Application 70 (Figure 3) and the sequence and action of the components of the transparent layer framework 60 for the data requiring from the remote BLE-Dev (Figure 3a).

With reference to Figure 3, in step 200 the user Application requests a new sensor or actuator (BLEItem 90) .

The embedded resource manager 100 creates a generic Device-type 110 (step 220).

The user Application automatically finds the required remote device/resource using the descriptor file (step 230).

The generic Device-type 110 now changes into a particular Device-type X (step 240).

At this point, a BLEItem 90 is created and connected to the data flow directed to and coming from the real remote device (step 250).

With reference to the flow chart of Figure 3a, the user Application 70 requests data to a BLE-Device 80, 82 (step 300).

The data is received from the BLE-device (step 302) and then "translated" by the Device-type X 110 (step 304) .

If necessary, the data is pre-elaborated by the BLEContext (step 306) before being transmitted to the BLEItem 90 (step 308).

For simple sensor, such as 'Button', the data sent from the BLE-Device 80, 82 is usually already suitable for the 'BLEItem' (e.g. button clicked/released), thus the 'BLEContext' is transparent (no elaboration). On the contrary, for more complex sensors, such as the accelerometer, the 'BLEContext' has to format the data. For example, if the remote device is programmed with the 'CC2541MiniDkDemoSlave.hex', the Firmware furnished by Texas Instruments, the data relative to the accelerometer axes are sent individually for each axis and not timestamped. On the contrary, in Android environment the three axes are typically sent in the same 'message' to the Application with timestamping. Thus, 'BLEContext' has to format the accelerometer data retrieved from the 'BLE-Dev' in the Android-standard format.

Data sent from the Application to the 'BLE-Dev' (e.g. data for actuators, as a lamp to be turned on or off) are transmitted on the opposite path.

### IV. A HOME AUTOMATION APPLICATION

For a test-case, two different development kits from different manufacturers have been used as remote devices in the same APP: four CC2541-DK boards with CC-Debugger programmer, produced by Texas Instruments (TI), together with one STEVAL-IDB002V1, BlueNRG development kit produced by ST, and thus ST-Link/V2 programmer.

The four boards by TI are programmed and addressed (the 'description file' is created) using 'FW stage' as disclosed in Section III.A to be used as two sensors 80 (buttons) and two actuators 82 (Alarms). The loaded FW is the 'CC2541MiniDkDemoSlave.hex', furnished by Texas Instruments, for all the four boards. This FW makes available, in a rough manner, without any elaboration, all the resources of the board: two buttons, x-axis accelerometer, y-axis accelerometer, z-axis accelerometer, buzzer-light, and battery measurement. The board from ST is programmed with the firmware 'SensorDemo.hex', which makes available the sensors embedded on the kit: accelerometer, temperature, pressure and humidity sensors.

In this simple home automation application (schematically shown in Figure 4), a wireless sensor network (WSN) has been created with a control device 120 (the smartphone), able to acquire information from sensors deployed in the house (in this test remote buttons 80 and a thermometer 80'), and the embedded resource of the smartphone (in this test screen buttons) and to control remote alarms 82, 82'.

The developed application exploits the alarm resource (buzzer-light) of two CC2541DK-MINIs and the first button of the other two boards of the same kind, whereas uses temperature sensor on the ST board. The proposed system allows the programmer to just address resources and functionalities, regardless they are internal or external the control device, handling sensors without bothering about any aspect of the communication.

In order to create the system, a simple Android Application has been developed, exploiting the proposed Transparency layer framework' 60, described in Section III.B, to turn on the alarm 82 on the left of Figure 4, if anyone of the remote buttons 80 is clicked, and turn on the alarm 82' on the right, if the temperature overcome the set threshold.

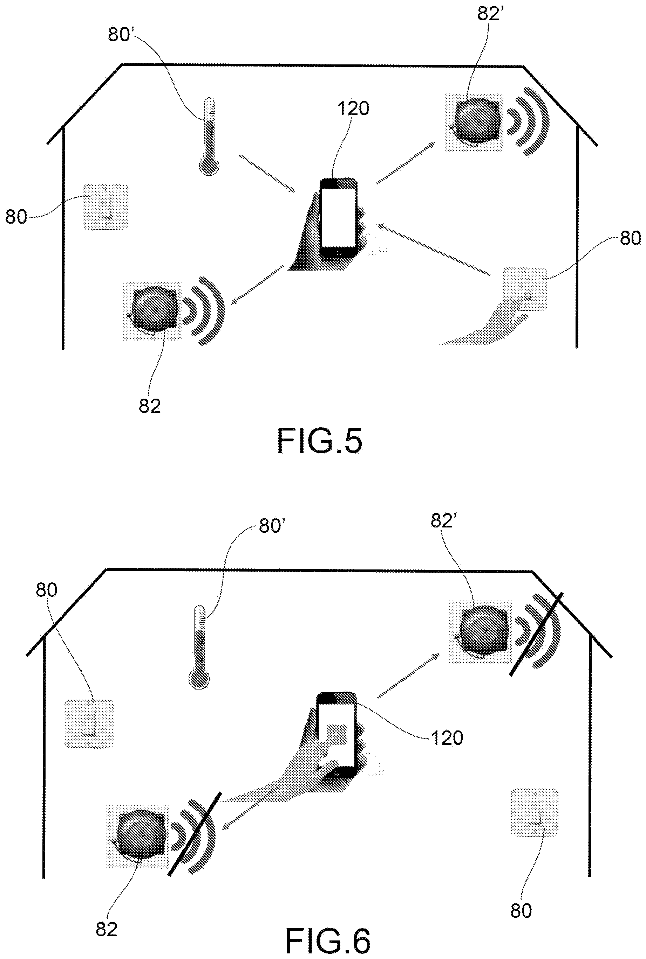

Figure 5 schematizes the situation of an alarmed system (for one of the two buttons clicked or temperature threshold overcoming). The sensor event, related to button clicking, is transmitted to the smartphone by the FW; then the Transparency layer framework' 60 actives the Button ('BLEItem') callback of the application. The callback in turn calls the alarms function of the 'BLEItem' alarm on the application, which transparently transmits the message to the alarm devices to turn the alarm on (set on GATT alarm characteristic). For the temperature sensor the situation is slight different, because 'SensorDemo.hex' does not support natively notification for this sensor; thus the Transparency Layer' does the continuous sampling in order to monitor the sensor value (requiring the temperature GATT characteristic), simulating the notification of the sensor. It should be highlighted that the user (application developer) is not bothered about the different FW.

The successive click on a screen button of the control device 120 triggers another function of the 'BLEItem' alarms, which transparently transmits the command to turn off the alarm (set off the GATT alarm characteristic), as shown in Figure 6.

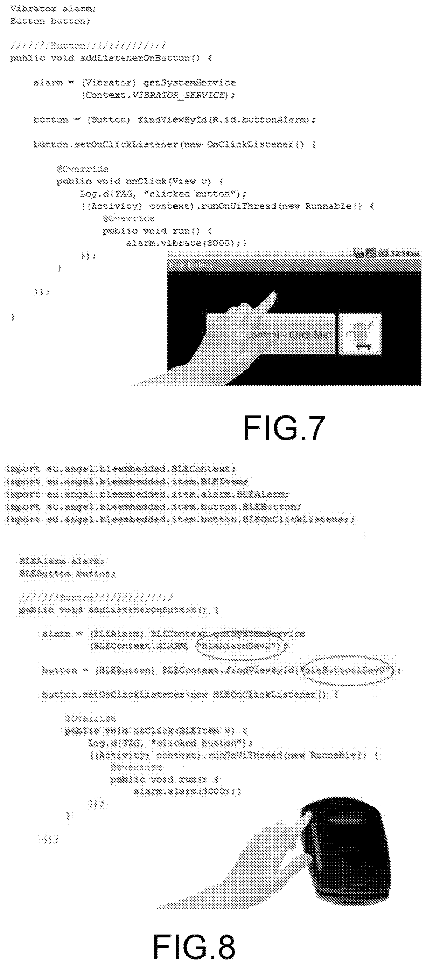

The piece of code of the Application realized is very similar to a one, which turns on the smartphone vibration if an embedded button is clicked. The code of such Application is shown in Figure 7 (application similar to the one proposed in this section). The code to realize the same functionality with a traditional approach would be more complex. For sake of brevity, the code, which execute the last issue, is not reported, but a short description of what should be done.
- Searching for the remote devices; without something like the App 'BLEEmbedded_flasher' (see 'FW stage') is impossible to automatize this procedure and find the exact resources;
- Handling the communication with the remote devices;
- Implementing in the code the exact UUIDs and handling the data coming from the devices, presuming that Android developer knows deeply the FW implemented in each remote devices and the data format;
- Rewriting of the application as a device slightly changes (e.g. MAC address, FW version, etc.)

Just the few points introduced require a lot of work for each Application meant to use BLE remote sensor data. Moreover the Application developed will be very rigid, needing code rewriting for each slight change in the system.

Figure 8 shows the sample code for implementing the callback (for sake of shortness only a 'BLEItem' alarm's function is triggered in this callback), which turns on the alarm on "Dev2" for 3 seconds, when the remote button 80 is clicked on the "Dev0". In Figure 8, before the callback, the two 'BLEItems' (i.e., BLEAlarm and BLEButton objects) are initialized and the classes of the library (the Transparency layer') are imported, whereas in the function the objects are instantiated. It should be noted as one of the parameters of the APIs used to instantiate the objects is a 'String' ("bleAlarmDev2" for the BLEAlarm object and "bleButton1Dev0" for the BLEButton object, rounded in Figure 8), which directly point to the remote resources exploited.

The code is practically the same in both the realizations, but the imports due to the library. It is important to highlight that the firmware of all the remote devices is the same and the function is assigned to a device simply using some of its resources (for example it is possible to reverse the function of "Dev0" and "Dev2").

### V. CONCLUSIONS

In the description above, a new architecture for supporting the development of sensors network application in Android environment has been proposed and experimentally tested. The system is divided in two main parts: one, called 'FW stage', a tool for programming and addressing the remote sensors; and the other one, called 'SW stage', a framework for allowing Android developers to handle remote sensors as they would be embedded ones. For the test case, two different kinds of boards have been used as remote sensors, because the structure of instruments developed in this method is very flexible: any board and microcontroller could be joined to the network, just adding the related Firmware in the 'Firmware Library' and adding the related Device type (see Figure 2) in the framework.

The actual framework exploits the Bluetooth 4.0 and 4.1 technologies to create the network between sensor devices and control device, but the concept could be extended to other wired or wireless technologies available on smart devices such as NFC, Wi-Fi, Wi-Fi direct, Ethernet and USB.

## Claims

1. Method for managing remote sensors and/or actuators (80, 82) from different manufacturers by means of a user application running on a control device provided with an operative system and with a communication interface supporting a wired or wireless communication system, comprising the steps of:
- creating the user application in the operative system's environment;
- storing (20) in a memory of the control device, a firmware library containing precompiled firmwares for all remote sensors and/or actuators to be controlled, the firmware library containing at least two different firmwares from different manufacturers;
- downloading (30) in a microcontroller memory of each remote sensor and/or actuator its suitable firmware from the firmware library stored in the control device's memory, if necessary;
- connecting each remote sensor and/or actuator to the control device through the wired or wireless communication system;
- associating to each firmware a descriptor file suitable for allowing the control device to uniquely identify and address resources of each remote sensor and/or actuator;
- providing, in the control device, software-based objects (90) corresponding to the remote sensors and/or actuators (80, 82) to be controlled, or to a combination thereof, each software-based object emulating the behavior of an embedded sensor and/or actuator designed according to the control device's operative system and being suitable to be instanced and handled by the user application,
- providing, in the control device, software-based devices (110) corresponding to the remote sensors and/or actuators (80, 82) and transparent to the user application, each software-based device (110) being suitable for handling communication and data acquisition/transmission with a corresponding remote sensor and/or actuator according to a respective firmware and descriptor file, and for transmitting to a particular software-based object (90) data received from at least one corresponding remote sensor or for receiving from a particular software object data to be transmitted to at least one corresponding remote actuator, the software-based devices (110) adapting a format of the data retrieved from the respective remote sensors and/or actuators to the operative system's data format used by the software-based objects (90), and vice-versa,
wherein, when the user application requests a new sensor or actuator, a generic software-based device is created, the user application automatically finds a required remote sensor or actuator using the descriptor file, changes the generic software-based device into a required software-based device and creates a software-based object corresponding to the required sensor or actuator, so that the created software-based object is connected to a data flow directed to and coming from the required remote sensor or actuator.

2. Method according to claim 1, wherein the wireless communication system is based on protocol Bluetooth® 4.0.

3. Method according to any of the previous claims, wherein the operative system is Android.

4. Method according to any of the previous claims, wherein the descriptor file of the remote sensors and/or actuators are identified by means of identifiers, IDs.

5. Method according to claim 4, wherein the identifiers are UUIDs, Universally Unique Identifiers, which provide information related to services and/or characteristics and/or descriptors.

6. Control device for managing remote sensors and/or actuators (80, 82) from different manufacturers, wherein each of the remote sensors and/or actuators communicates with the control device through a wired or wireless communication channel, wherein the control device is provided with an operative system and includes a user application (70) configured to manage said remote sensors and/or actuators, and wherein the software for the user application has been developed in the operative system's environment, the control device further comprising:
- a firmware library containing precompiled firmwares for all remote sensors and/or actuators to be controlled, the firmware library containing at least two different firmwares from different manufacturers and being stored in a memory (20) of the control device;
- software means for downloading in a microcontroller memory of each remote sensor and/or actuator (80, 82) a suitable firmware taken from the firmware library stored in the control device's memory;
- software means for associating to each firmware a descriptor file suitable for allowing the control device to uniquely identify and address resources of each remote sensor and/or actuator;
- software-based objects (90) corresponding to each remote sensor and/or actuator to be controlled, or to a combination thereof, each software-based object is configured to emulate the behavior of an embedded sensor and/or actuator designed according to the control device's operative system and is configured to be instanced and handled by the user application,
- software-based devices (110) corresponding to the remote sensors and/or actuators and transparent to the user application, each software-based device (110) is configured to handle communication and data acquisition/transmission with a corresponding remote sensor and/or actuator (80, 82) according to a respective firmware and file descriptor, and to transmit to a particular software-based object (90) data received from at least one corresponding remote sensor or to receive from a particular software object data to be transmitted to at least one corresponding remote actuator, the software-based devices (110) being configured to adapt a format of the data retrieved from the respective remote sensors and/or actuators to the operative system's data format used by the software-based objects (90), and vice-versa,
- an embedded Resource Manager software module (100) configured to create, when the user application requests a new sensor or actuator, a generic software-based device, and, the user application is configured to automatically find a required remote sensor or actuator using the descriptor file, to change the generic software-based device into a required software-based device and to create a software-based object corresponding to the required sensor or actuator, so that the created software-based object is connected to a data flow directed to and coming from the required remote sensor or actuator.

## Patentansprüche

1. Ein Verfahren zum Verwalten von entfernten Sensoren und/oder Aktuatoren (80, 82) von verschiedenen Herstellern mittels einer Benutzeranwendung, die auf einem Steuergerät läuft, das mit einem Betriebssystem ausgestattet ist und mit einer Kommunikationsschnittstelle, die ein verdrahtetes oder drahtloses Kommunikationssystem unterstützt, die folgenden Schritte umfassend:
- Erzeugen der Benutzeranwendung in der Umgebung des Betriebssystems;
- Speichern (20), in einem Speicher der Steuervorrichtung, einer Firmware-Bibliothek die vorkompilierte Firmwares für alle zu steuernden entfernten Sensoren und/oder Aktuatoren enthält, wobei die Firmware-Bibliothek mindestens zwei unterschiedliche Firmwares von unterschiedlichen Herstellern enthält;
- Herunterladen (30), in einen Mikrocontroller-Speicher jedes entfernten Sensors und/oder Aktuators, dessen geeignete Firmware aus der im Speicher des Steuergeräts gespeicherten Firmware-Bibliothek, falls erforderlich;
- Verbinden jedes entfernten Sensors und/oder Aktuators mit der Steuervorrichtung über das verdrahtete oder drahtlose Kommunikationssystem;
- Zuordnen einer Deskriptor-Datei zu jeder Firmware, die geeignet ist, dem Steuergerät die eindeutige Identifizierung und Adressierung von Ressourcen jedes entfernten Sensors und/oder Aktuators zu ermöglichen; und/oder
- Bereitstellen, in der Steuervorrichtung, von softwarebasierten Objekten (90) die den zu steuernden entfernten Sensoren und/oder Aktuatoren (80, 82) oder einer Kombination davon entsprechen, wobei jedes softwarebasierte Objekt das Verhalten eines eingebetteten Sensors und/oder Aktuators emuliert, der gemäß dem Betriebssystem der Steuervorrichtung entworfen wurde und geeignet ist, von der Benutzeranwendung instanziiert und gehandhabt zu werden,
- Bereitstellen, in der Steuervorrichtung, von softwarebasierten Vorrichtungen (110), die den entfernten Sensoren und/oder Aktuatoren (80, 82) entsprechen und für die Benutzeranwendung transparent sind, wobei jede softwarebasierte Vorrichtung (110) geeignet ist, die Kommunikation und Datenerfassung/-übertragung mit einem entsprechenden entfernten Sensor und/oder Aktuator gemäß einer jeweiligen Firmware und Deskriptor-Datei zu handhaben, und zum Übertragen von Daten, die von mindestens einem entsprechenden entfernten Sensor empfangen wurden, an ein bestimmtes softwarebasiertes Objekt (90), oder zum Empfangen von Daten, die an mindestens einen entsprechenden entfernten Aktuator zu übertragen sind, von einem bestimmten Softwareobjekt, wobei die softwarebasierten Vorrichtungen (110) ein Format der Daten, die aus den jeweiligen entfernten Sensoren und/oder Aktuatoren abgerufen werden, an das von den softwarebasierten Objekten (90) verwendete Datenformat des Betriebssystems anpassen und umgekehrt,
wobei, wenn die Benutzeranwendung einen neuen Sensor oder Aktuator anfordert, eine generische softwarebasierte Vorrichtung erzeugt wird, die Benutzeranwendung automatisch einen erforderlichen entfernten Sensor oder Aktuator unter Verwendung der Deskriptor-Datei findet, die generische softwarebasierte Vorrichtung in eine erforderliche softwarebasierte Vorrichtung ändert und ein softwarebasiertes Objekt erzeugt, das dem erforderlichen Sensor oder Aktuator entspricht, sodass das erzeugte softwarebasierte Objekt mit einem Datenfluss verbunden ist, der zum erforderlichen entfernten Sensor oder Aktuator gerichtet ist und von diesem kommt.

2. Das Verfahren nach Anspruch 1, wobei das drahtlose Kommunikationssystem auf dem Protokoll Bluetooth® 4.0 basiert.

3. Das Verfahren nach irgendeinem der vorstehenden Ansprüche, wobei das Betriebssystem Android ist.

4. Das Verfahren nach irgendeinem der vorstehenden Ansprüche, wobei die Deskriptor-Datei der entfernten Sensoren und/oder Aktuatoren mittels Identifikatoren, IDs, identifiziert werden.

5. Das Verfahren nach Anspruch 4, wobei die Identifikatoren UUIDs (*Universally Unique Identifiers*) sind, die Informationen in Bezug auf Dienste und/oder Merkmale und/oder Deskriptoren bereitstellen.

6. Eine Steuervorrichtung zum Verwalten von entfernten Sensoren und/oder Aktuatoren (80, 82) von verschiedenen Herstellern, wobei jeder der entfernten Sensoren und/oder Aktuatoren mit der Steuervorrichtung über einen verdrahteten oder drahtlosen Kommunikationskanal kommuniziert, wobei die Steuervorrichtung mit einem Betriebssystem ausgestattet ist und eine Benutzeranwendung (70) beinhaltet, die konfiguriert ist, um die genannten entfernten Sensoren und/oder Aktuatoren zu verwalten, und wobei die Software für die Benutzeranwendung in der Umgebung des Betriebssystems entwickelt wurde, wobei die Steuervorrichtung ferner Folgendes umfasst:
- eine Firmware-Bibliothek, die vorkompilierte Firmwares für alle zu steuernden entfernten Sensoren und/oder Aktuatoren enthält, wobei die Firmware-Bibliothek mindestens zwei verschiedene Firmwares von verschiedenen Herstellern enthält und in einem Speicher (20) des Steuergeräts gespeichert ist;
- Softwaremittel zum Herunterladen einer geeigneten Firmware, die der im Speicher der Steuervorrichtung gespeicherten Firmware-Bibliothek entnommen ist, in einen Mikrocontrollerspeicher jedes entfernten Sensors und/oder Aktuators (80, 82);
- Softwaremittel, um jeder Firmware eine Deskriptor-Datei zuzuordnen, die geeignet ist, der Steuervorrichtung zu ermöglichen, Ressourcen jedes entfernten Sensors und/oder Aktuators eindeutig zu identifizieren und zu adressieren;
- softwarebasierte Objekte (90), die jedem zu steuernden entfernten Sensor und/oder Aktuator oder einer Kombination davon entsprechen, wobei jedes softwarebasierte Objekt konfiguriert ist, um das Verhalten eines eingebetteten Sensors und/oder Aktuators zu emulieren, der gemäß dem Betriebssystem der Steuervorrichtung entworfen wurde, und konfiguriert ist, um von der Benutzeranwendung instanziiert und gehandhabt zu werden,
- softwarebasierte Vorrichtungen (110), die den entfernten Sensoren und/oder Aktuatoren (80, 82) entsprechen und für die Benutzeranwendung transparent sind, wobei jede softwarebasierte Vorrichtung (110) konfiguriert ist, die Kommunikation und Datenerfassung/-übertragung mit einem entsprechenden entfernten Sensor und/oder Aktuator gemäß einer jeweiligen Firmware und einem Datei-Deskriptor zu handhaben, und zum Übertragen von Daten, die von mindestens einem entsprechenden entfernten Sensor empfangen wurden, an ein bestimmtes softwarebasiertes Objekt (90), oder zum Empfangen von Daten, die an mindestens einen entsprechenden entfernten Aktuator zu übertragen sind, von einem bestimmten Softwareobjekt, wobei die softwarebasierten Vorrichtungen (110) konfiguriert sind, um ein Format der von den jeweiligen entfernten Sensoren und/oder Aktuatoren abgerufenen Daten an das Datenformat des Betriebssystems anzupassen, das von den softwarebasierten Objekten (90) verwendet wird, und umgekehrt,
- ein eingebettetes Ressourcenmanager-Softwaremodul (100), das so konfiguriert ist, dass es, wenn die Benutzeranwendung einen neuen Sensor oder Aktuator anfordert, eine generische softwarebasierte Vorrichtung erzeugt, und dass die Benutzeranwendung so konfiguriert ist, dass sie einen erforderlichen entfernten Sensor oder Aktuator unter Verwendung der Deskriptor-Datei automatisch findet, um die generische softwarebasierte Vorrichtung in eine erforderliche softwarebasierte Vorrichtung zu ändern und ein softwarebasiertes Objekt zu erzeugen, das dem erforderlichen Sensor oder Aktuator entspricht, sodass das erzeugte softwarebasierte Objekt mit einem Datenfluss verbunden ist, der zu dem erforderlichen entfernten Sensor oder Aktuator gerichtet ist und von diesem kommt.

## Revendications

1. Procédé de gestion de capteurs et/ou actionneurs distants (80, 82) de différents fabricants au moyen d'une application utilisateur s'exécutant sur un dispositif de commande muni d'un système d'exploitation et d'une interface de communication prenant en charge un système de communication filaire ou sans fil, comprenant les étapes de :
- création de l'application utilisateur dans l'environnement du système d'exploitation ;
- stockage (20), dans une mémoire du dispositif de commande, d'une bibliothèque de micrologiciels contenant des micrologiciels précompilés pour tous les capteurs et/ou actionneurs distants à commander, la bibliothèque de micrologiciels contenant au moins deux micrologiciels différents de différents fabricants ;
- téléchargement (30) dans la mémoire d'un microcontrôleur de chaque capteur et/ou actionneur distant de son micrologiciel approprié à partir de la bibliothèque de micrologiciels stockée dans la mémoire du dispositif de commande, si nécessaire ;
- connexion de chaque capteur et/ou actionneur distant au dispositif de commande par le biais du système de communication filaire ou sans fil ;
- association à chaque micrologiciel d'un fichier de descripteurs approprié pour permettre au dispositif de commande d'identifier et d'adresser de manière unique des ressources de chaque capteur et/ou actionneur distant ;
- fourniture, dans le dispositif de commande, d'objets logiciels (90) correspondant aux capteurs et/ou actionneurs distants (80, 82) à commander, ou à une combinaison de ceux-ci, chaque objet logiciel émulant le comportement d'un capteur et/ou actionneur intégré conçu selon le système d'exploitation du dispositif de commande et étant approprié pour être instancié et traité par l'application utilisateur,
- fourniture, dans le dispositif de commande, de dispositifs logiciels (110) correspondant aux capteurs et/ou actionneurs distants (80, 82) et transparents pour l'application utilisateur, chaque dispositif logiciel (110) étant approprié pour traiter une communication et une acquisition/transmission de données avec un capteur et/ou actionneur distant correspondant selon un micrologiciel et un fichier de descripteurs respectifs, et pour transmettre à un objet logiciel particulier (90) des données reçues d'au moins un capteur distant correspondant ou pour recevoir d'un objet logiciel particulier des données à transmettre à au moins un actionneur distant correspondant, les dispositifs logiciels (110) adaptant un format des données récupérées des capteurs et/ou actionneurs distants respectifs au format de données du système d'exploitation utilisé par les objets logiciels (90), et vice-versa,
dans lequel, lorsque l'application utilisateur requiert un nouveau capteur ou actionneur, un dispositif logiciel générique est créé,
l'application utilisateur trouve automatiquement un capteur ou actionneur distant requis en utilisant le fichier de descripteurs, modifie le dispositif logiciel générique en dispositif logiciel requis et crée un objet logiciel correspondant au capteur ou à l'actionneur requis, de façon telle que l'objet logiciel créé est connecté à un flux de données dirigé vers et provenant du capteur ou de l'actionneur distant requis.

2. Procédé selon la revendication 1, dans lequel le système de communication sans fil est basé sur le protocole Bluetooth® 4.0.

3. Procédé selon l'une quelconque des revendications précédentes, dans lequel le système d'exploitation est Android.

4. Procédé selon l'une quelconque des revendications précédentes, dans lequel le fichier de descripteurs des capteurs et/ou actionneurs distants est identifié au moyen d'identifiants, ID.

5. Procédé selon la revendication 4, dans lequel les identifiants sont des UUID, identifiants uniques universels, qui fournissent des informations relatives à des services et/ou des caractéristiques et/ou des descripteurs.

6. Dispositif de commande pour gérer des capteurs et/ou des actionneurs distants (80, 82) de différents fabricants, dans lequel chacun des capteurs et/ou actionneurs distants communique avec le dispositif de commande par le biais d'un canal de communication filaire ou sans fil, dans lequel le dispositif de commande est pourvu d'un système d'exploitation et comprend une application utilisateur (70) configurée pour gérer lesdits capteurs et/ou actionneurs distants, et dans lequel le logiciel de l'application utilisateur a été développé dans l'environnement du système d'exploitation, le dispositif de commande comprenant en outre :
- une bibliothèque de micrologiciels contenant des micrologiciels précompilés pour tous les capteurs et/ou actionneurs distants à commander, la bibliothèque de micrologiciels contenant au moins deux micrologiciels différents de fabricants différents et étant stockée dans une mémoire (20) du dispositif de commande ;
- un moyen logiciel pour télécharger dans la mémoire d'un microcontrôleur de chaque capteur et/ou actionneur distant (80, 82) un micrologiciel approprié tiré de la bibliothèque de micrologiciels stockée dans la mémoire du dispositif de commande ;
- un moyen logiciel pour associer à chaque micrologiciel un fichier de descripteurs approprié pour permettre au dispositif de commande d'identifier et d'adresser de manière unique des ressources de chaque capteur et/ou actionneur distant ;
- des objets logiciels (90) correspondant à chaque capteur et/ou actionneur distant à commander, ou à une combinaison de ceux-ci, chaque objet logiciel étant configuré pour émuler le comportement d'un capteur et/ou actionneur intégré conçu selon le système d'exploitation du dispositif de commande et étant configuré pour être instancié et traité par l'application utilisateur,
- des dispositifs logiciels (110) correspondant aux capteurs et/ou actionneurs distants et transparents pour l'application utilisateur, chaque dispositif logiciel (110) étant configuré pour traiter une communication et une acquisition/transmission de données avec un capteur et/ou actionneur distant (80, 82) correspondant selon un micrologiciel et un descripteur de fichiers respectifs, et pour transmettre à un objet logiciel particulier (90) des données reçues d'au moins un capteur distant correspondant ou pour recevoir d'un objet logiciel particulier des données à transmettre à au moins un actionneur distant correspondant, les dispositifs logiciels (110) étant configurés pour adapter un format des données récupérées des capteurs et/ou actionneurs distants respectifs au format de données du système d'exploitation utilisé par les objets logiciels (90), et vice versa,
- un module logiciel de gestionnaire de ressource intégré (100) configuré pour créer, lorsque l'application utilisateur requiert un nouveau capteur ou actionneur, un dispositif logiciel générique, et l'application utilisateur étant configurée pour trouver automatiquement un capteur ou actionneur distant requis en utilisant le fichier de descripteurs, pour modifier le dispositif logiciel générique en dispositif logiciel requis et pour créer un objet logiciel correspondant au capteur ou actionneur requis, de façon telle que l'objet logiciel créé est connecté au flux de données dirigé vers et provenant du capteur ou actionneur distant requis.
